# EUROPÄISCHE PATENTSCHRIFT

(11) **EP 0 894 670 B1**
(45) Veröffentlichungstag und Bekanntmachung des Hinweises auf die Patenterteilung: **25.02.2004**
(21) Anmeldenummer: 98113286.3
(22) Anmeldetag: 16.07.1998
(51) Int. Cl.: B60R 1/06

(54) **Aussenrückblickspiegel mit Seilzugverstellung**
Exterior rear view mirror with cable operated control
Rétroviseur extérieur avec dispositif de commande par câble

(30) Priorität: 29.07.1997 DE 19732491
(43) Veröffentlichungstag der Anmeldung: 03.02.1999
(73) Patentinhaber: Mittelhäuser, Bernhard, D-30900 Wedemark (DE)
(72) Erfinder: Schubert, Jan, 30900 Wedemark (DE)
(74) Vertreter: Gerstein, Hans Joachim

(56) Entgegenhaltungen:
- EP-A- 0 014 118
- DE-A- 1 530 835
- DE-A- 2 260 631
- DE-U- 9 203 326
- FR-A- 1 552 228
- FR-A- 2 364 142
- FR-A- 2 512 759
- US-A- 3 057 262
- US-A- 3 077 142
- US-A- 3 191 455
- US-A- 3 225 621
- US-A- 3 283 607
- US-A- 3 286 545
- US-A- 3 370 479
- US-E- R E27 172

## Beschreibung

Die Erfindung bezieht sich auf einen durch zwei Seilzüge verstellbaren Außenrückblickspiegel für Kraftfahrzeuge, wobei die Seilzüge wahlweise gegensinnig oder gleichsinnig verstellbar sind und die Spiegelscheibe einmal um eine Querachse und zum anderen um eine Hochachse verstellbar ist, die praktisch senkrecht zu der ersten Querachse verläuft, wobei ein durch einen Bedienungshebel betätigbares Kugelgelenk vorgesehen ist, deren Kugel mit dem Bedienungshebel über einen Arm mit einer Traverse verbunden ist. An der Traverse greifen die Seilzüge im Abstand voneinander an, wobei die Traverse durch eine Verbreiterung am Ende des Arms gebildet ist. Der sich im Winkel, vorzugsweise im rechten Winkel zu dem Bedienungshebel erstreckende Arm ist durch Verschwenken des Bedienungshebels verschiebbar, so dass die Traverse zur Durchführung einer gemeinsamem Bewegung der Seilzüge in Querrichtung bewegbar ist, während durch eine andere Schwenkbewegung des Bedienungshebels der Arm um seine Längsachse verdrehbar und somit die Traverse zur gegensinnigen Bewegung der Seilzüge verschwenkbar ist.

Ein derartiger Außenrückspiegel ist aus der US-A-3 077 142 bekannt.

Aufgabe der Erfindung ist es, die Nachteile des Standes der Technik zu vermeiden und einen Spiegel bereitzustellen, bei dem diese synchrone und gleichsinnige Bewegung des Armes unterstützt wird, wobei der Verstellmechanismus nur eine geringe Einbautiefe erfordert und zu dessen Verstellung nur Schwenk- bzw. Kippbewegungen des Bedienungshebels erforderlich sind.

Zur Lösung dieser Aufgabe ist erfindungsgemäss der Bedienungshebel in einer Führung verschiebbar.

Die abhängigen Ansprüche 2 bis 11 beinhalten vorteilhafte Weiterbildungen des Aussenrückspiegels gemäß Anspruch 1.

Ein Ausführungsbeispiel der Erfindung ist in der Zeichnung dargesteltt. Es zeigen:

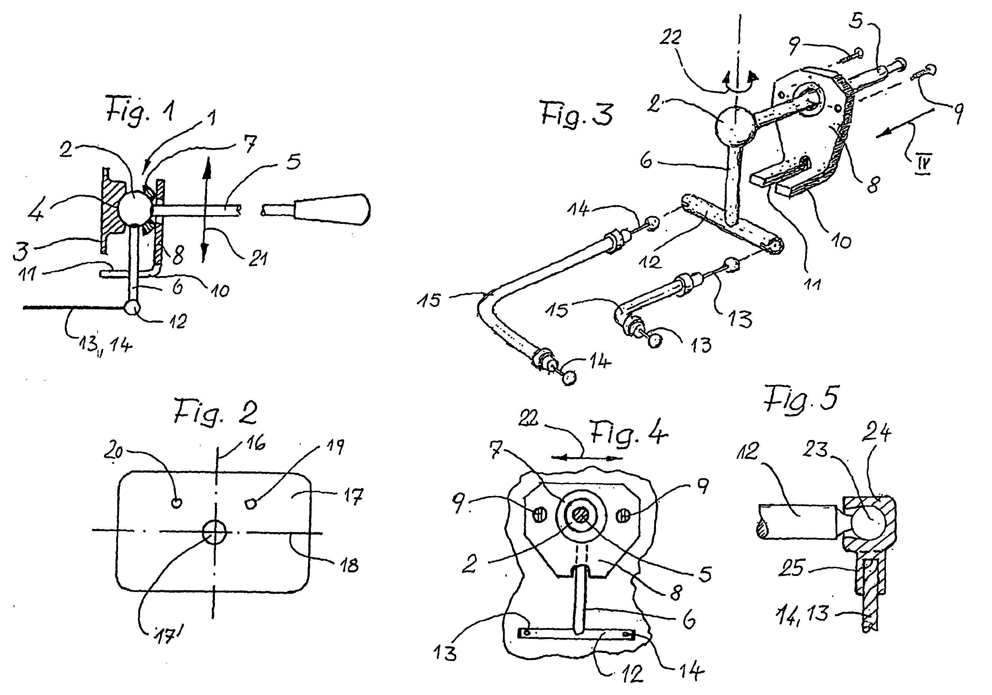

Fig. 1 einen senkrechten Teilschnitt durch den am Fahrzeug befestigten Fuss des Gehäuses eines Aussenrückblickspiegels für Fahrzeuge, und zwar einen Schnitt durch das von einem Bedienungshebel zu betätigenden Kugelgelenk,
Fig. 2 die dem Spiegel zugeordnete Spiegelscheibe in der Rückansicht,
Fig. 3 eine Explosionsdarstellung des Kugelgelenkbereiches von der dem Bedienungshebel abgekehrten Seite des Kugelgelenks aus gesehen in Schrägansicht,
Fig. 4 eine Teilansicht in Richtung des Pfeiles IV von Fig. 3 gesehen und
Fig. 5 eine Befestigungsstelle für einen Seilzug an einem Ende einer Traverse im Teilschnitt.

Der dem Fahrzeug abgekehrte Teil des Kugelgelenks 1 mit Kugel 2 wird von einer Wandung 3 des Spiegelgehäusefusses gebildet; die dort befindliche Halterung für die Kugel 2 ist mit 4 bezeichnet. Mit der Kugel 2 ist einmal ein zum Fahrzeuginneren gerichteter, imwesentlichen waagerechter Bedienungshebel 5 und etwa im rechten Winkel dazu ein sich nach unten erstreckender, im wesentlichen senkrechter Arm 6 verbunden. Eine äussere, auf die Kugel 2 einwirkende Scheibe 7 zusammen mit einem auf dieser Scheibe 7 aufliegenden, senkrechten Schenkel eines Winkelstückes 8 ist durch zwei Schrauben 9 gehalten, die das Kugelgelenk 1 zusammenhalten und mit der Wandung 3 verbunden sind.

Der im wesentlichen waagerechte Abschnitt 10 des Winkelstücks 8 ist gabelförmig mit Schlitz 11 ausgeführt, das sich etwa waagerecht nach aussen zum Inneren des Spiegelgehäuses hin erstreckt. In diesem Schlitz 11 ist der Arm 6 unterhalb des Kugelgelenks 1 geführt.

Am freien, unteren Ende des Arms 6 befindet sich eine etwa waagerechte Traverse 12, die etwa im rechten Winkel zum Arm 6 bzw. dem Bedienungshebel 5 erstreckt. An den Enden dieser Traverse 12 greifen zwei aus Stahl bestehende Seile 13, 14 an, die nach Art von Bowden-Zügen spielfrei in unverschiebbar gelagerten, biegsamen Hüllen 15 gehaltert sind und sowohl zugfest als auch in Längsrichtung druckfest sind. Die beiden Seile 13, 14 greifen gelenkig zu beiden Seiten einer senkrechten Querachse 16 ( Hochachse ) der Spiegelscheibe 17 - innerhalb des Spiegelgehäuses befindlich - auf der Rückseite der Spiegelscheibe 17 an, und zwar beide im gleichen Abstand von einer etwa waagerechten Querachse 18 und der Querachse 16. Die beiden Einwirkungsstellen für die Seile 13, 14 auf der Rückseite der Spiegelscheibe 17 sind mit 20, 19, das zur verstellbaren Lagerung der Spiegelscheibe 17 zentrisch engeordnete Kugelgelenk mit 17' bezeichnet.

Zur Handhabung und Wirkungsweise sei ausgeführt, dass eine Verschwenkung des Bedienungshebels 5 im Sinne des Doppelpfeiles 21 bzw. nach oben oder unten eine Verschiebung des Armes 6 im Schlitz 11 zur Folge hat. Demgemäss führt auch die Traverse 12 eine entsprechende Bewegung nach vorne bzw. hinten aus. Damit werden beide Seile 13, 14 synchron und gleichsinnig bewegt, wodurch eine Verschwenkung der Spiegelscheibe 17 um die Querachse 18 erreicht wird.

Wird hingegen der Bedienungshebel 5 waagerecht im Sinne des Doppelpfeiles 22 verschwenkt, so folgt eine entsprechende Bewegung des Armes 6 und eine Verschwenkung der Traverse 12; dadurch werden die Seile 13, 14 gegensinnig bewegt. Es wird so eine Verschwenkung der Spiegelscheibe 17 um die senkrechte Querachse 16 erreicht.

Es ist somit möglich, durch ein Verschwenken des Bedienungshebels 5 zur Seite hin oder nach oben bzw. unten die gewünschte Spiegelverstellung mit nur zwei Seilen 13, 14 vorzunehmen, ohne dazu auf die Spiegelscheibe 17 Rückholfedern od. dgl. einwirken zu lassen.

Es sei erwähnt, dass ggfs. die Scheibe 7 in Fortfall kommen kann; in diesem Falle muss der senkrechte Schenkel des Winkelstückes 8 entsprechend ausgebildet sein z.B. durch Abrundungen des Randes des im Schenkel befindlichen Loches, damit er an der Kugel 2 anliegen kann. Wichtig ist ferner, dass die Spiegelverstellung unter Verzicht auf Rückholfedern stattfindet und somit ausschliesslich durch die beiden Seile 13, 14 erfolgt.

Um eine besonders dauerhafte und betriebssichere, zugleich aber auch winkelbewegliche Verbindung der Seilzüge 13, 14 mit den Enden der Traverse 12 herbeiführen zu können, sind die Enden der Traverse 12 mit einer Kugel 23 versehen, an der eine die Kugel 23 umschliessende Pfanne 24 angreift, die mit einem einseitig angeordneten Schaft 25 ausgestattet ist, der bei der Abformung durch Aufspritzen des Werkstoffes festhaftend mit den Enden der Seilzüge 13, 14 verbunden ist. Die Teile 24, 25 werden von einem einheitlichen Formkörper aus einem geringfügig elastisch verformbaren, härteren Kunststoff gebildet, wobei die Öffnung der Pfanne 24 so ausgelegt ist, dass die Pfanne 24 unter elastischer Aufweitung ihrer Öffnung zum Zwecke der Montage einfach auf die Kugel 23 aufgeschoben werden kann und sich dann in der Stellung gemäss Fig. 5 ohne weiteres auf der Kugel 23 festhält, und zwar ohne zusätzliche Haltemittel. Auf diese Weise wird ein Gelenk nach Art eines Kugelgelenkes geschaffen.

## Patentansprüche

1. Durch zwei Seilzüge verstellbare Außenrückblickspiegel für Kraftfahrzeuge, wobei die Seilzüge (13, 14) wahlweise gegensinnig oder gleichsinnig verstellbar sind und die Spiegelscheibe (17) einmal um eine Querachse und zum anderen un eine Querachse (Hochachse) verstellbar ist, die praktisch senkrecht zu der ersten Querachse verläuft, wobei ein durch einen Bedienungshebel (5) betätigbares Kugelgelenk (1) vorgesehen ist, deren Kugel (2) mit dem Bedienungshebel (5) und über einen Arm (6) mit einer Traverse (12) verbunden ist, an der die Seilzüge (13, 14) im Abstand voneinander angreifen, der sich im Winkel, vorzugsweise im rechten Winkel zum Bedienungshebel (5) erstreckender Arm (6) durch Verschwenken des Bedienungshebels (5) verschiebbar ist, so dass die Traverse (12) zur Durchführung einer gemeinsamen Bewegung der beiden Seilzüge (13, 14) in Querrichtung bewegbar ist, während durch eine andere Schwenkbewegung des Bedienungshebels (5) der Arm um seine Längsachse verdrehbar und somit die Traverse (12) zur gegensinnigen Bewegung der Seilzüge (13, 14) verschwenkar ist, **dadurch gekennzeichnet, dass** der Bedienungshebel (5) in einer Führung (11) verschiebbar ist.

2. Spiegel nach Anspruch 1, **dadurch gekennzeichnet, dass** sich der Arm (6) vom Kugelgelenk (1) aus nach unten erstreckt.

3. Spiegel nach Anspruch 2, **dadurch gekennzeichnet, dass** sich der Arm (6) im wesentlichen senkrecht nach unten erstreckt.

4. Spiegel nach Anspruch 1 und 2, **dadurch gekennzeichnet, dass** die Traverse (12) am unteren Ende des Armes (6) angeordnet ist und mit ihm einen Winkel von etwa 90° bildet.

5. Spiegel nach Anspruch 1, **dadurch gekennzeichnet, dass** die Führung für den Arm (6) von einem Schenkel eines Winkelstücks (8) gebildet ist, dessen anderer Schenkel am Kugelgelenk (1) bzw. zusammen mit diesem am Spiegelfuss (3) befestigt ist.

6. Spiegel nach Anspruch 5, **dadurch gekennzeichnet, dass** die Führung ein vorzugsweise randoffener Schlitz (11) des Schenkels ist.

7. Spiegel nach Anspruch 5, **dadurch gekennzeichnet, dass** die Führung im wesentlichen waagerecht verläuft.

8. Spiegel nach Anspruch 1, **dadurch gekennzeichnet, dass** sich die Führung (11) im wesentlichen in Richtung des Bedienungshebels (5) erstreckt.

9. Spiegel nach Anspruch 5, **dadurch gekennzeichnet, dass** der andere Schenkel die Kugel (2) des Kugelgelenks (1) übergreift und deren Befestigungselemente (9) auch zur Befestigung des Winkelstückes (8) dienen.

10. Spiegel nach Anspruch 9, **dadurch gekennzeichnet, dass** das Winkelstück (8) Bestandteil des Aussenteils (der die Kugel des Kugelgelenks umschliessende Teil ) des Kugelgelenks (1) ist und vorzugsweise unmittelbar an der Kugel (2) des Kugelgelenks anliegt.

11. Spiegel nach Anspruch 1, **dadurch gekennzeichnet, dass** die Enden der Traverse (12) kugelförmig gestaltet sind, auf die eine Pfanne (24) mit einer zum Zwecke der Montag elastisch aufweitbaren Öffnung aufgeschoben ist, wobei die Pfanne einen abstehenden Schaft (25) aufweist, der die Enden der Seilzüge (13,14) fest umschliesst.

## Claims

1. Exterior rearview mirror which can be adjusted by two control cables, for motor vehicles, it being possible for the control cables (13, 14) to be adjusted either in an opposed direction or in the same direction and it being possible for the mirror glass (17) to be adjusted firstly about a transverse axis and secondly about a transverse axis (vertical axis) which runs virtually perpendicular with respect to the first transverse axis, a ball-and-socket joint (1) which can be actuated by an operating lever (5) being provided, the ball (2) of which is connected to the operating lever (5) and, via an arm (6), to a crosspiece (12), on which the control cables (13, 14) engage at a distance from each other, it being possible for the arm (6), which extends at an angle, preferably at a right angle to the operating lever (5), to be displaced by pivoting of the operating lever (5), so that the crosspiece (12) can be moved in the transverse direction, in order to carry out a common movement of the two control cables (13, 14), while another pivoting movement of the operating lever (5) causes the arm to be rotated about its longitudinal axis and therefore the crosspiece (12) to be pivoted to provide an opposed movement of the control cables (13, 14), **characterized in that** the operating lever (5) can be displaced in a guide (11).

2. Mirror according to Claim 1, **characterized in that** the arm (6) extends downwards from the ball-and-socket joint (1).

3. Mirror according to Claim 2, **characterized in that** the arm (6) extends essentially vertically downwards.

4. Mirror according to Claims 1 and 2, **characterized in that** the crosspiece (12) is arranged at the lower end of the arm (6) and forms an angle of approximately 90° with it.

5. Mirror according to Claim 1, **characterized in that** the guide for the arm (6) is formed by one leg of an angled element (8), the other leg of which is fastened to the ball-and-socket joint (1) and together with the latter to the mirror base plate (3).

6. Mirror according to Claim 5, **characterized in that** the guide is preferably an open-edged slot (11) of the leg.

7. Mirror according to Claim 5, **characterized in that** the guide runs essentially horizontally.

8. Mirror according to Claim 1, **characterized in that** the guide (11) extends essentially in the direction of the operating lever (5).

9. Mirror according to Claim 5, **characterized in that** the other leg engages over the ball (2) of the ball-and-socket joint (1) and the fastening elements (9) of the said leg also serve for fastening the angled element (8).

10. Mirror according to Claim 9, **characterized in that** the angled element (8) is part of the outer part of the ball-and-socket joint (1) (the part surrounding the ball of the ball-and-socket joint) and preferably bears directly against the ball (2) of the ball-and-socket joint.

11. Mirror according to Claim 1, **characterized in that** the ends of the crosspiece (12) are of spherical design and a socket (24) having an opening which can be expanded elastically for installation purposes is pushed onto them, the socket having a protruding stem (25) which firmly encloses the ends of the control cables (13, 14).

## Revendications

1. Rétroviseur extérieur réglable par deux câbles, pour véhicules, les deux câbles (13, 14) étant réglables au choix en sens contraire ou dans le même sens et le miroir (17) étant réglable d'une part autour d'un axe transversal et d'autre part autour d'un axe transversal (axe vertical) qui est pratiquement perpendiculaire au premier axe transversal, rétroviseur dans lequel est prévu une rotule (1) pouvant être actionnée par un levier d'utilisation (5), rotule dont la boule (2) est reliée au levier d'utilisation (5) et par l'intermédiaire d'un bras à une traverse (12) avec laquelle les câbles (13, 14) viennent en prise à distance l'un de l'autre, le bras (6) s'étendant suivant un angle, de préférence un angle droit par rapport au levier d'utilisation est déplaçable par pivotement du levier d'utilisation (5) de sorte que la traverse (12) est mobile en direction transversale pour effectuer un mouvement commun des deux câbles (13, 14) tandis que par un autre mouvement pivotant du levier d'utilisation (5) le bras est rotatif autour de son axe longitudinal et ainsi la traverse (12) est pivotante pour un mouvement des câble (13, 14) en sens contraires, **caractérisé en ce que** le levier d'utilisation (5) est déplaçable dans un guidage (11).

2. Rétroviseur selon la revendication 1, **caractérisé en ce que** le bras (6) s'étend vers le bas à partir de la rotule (1).

3. Rétroviseur selon la revendication 2, **caractérisé en ce que** le bras (6) s'étend sensiblement verticalement vers le bas.

4. Rétroviseur selon la revendication 1 et 2, **caractérisé en ce que** la traverse est agencée à l'extrémité inférieure du bras (6) et forme un angle d'environ 90° avec celui-ci.

5. Rétroviseur selon la revendication 1, **caractérisé en ce que** le guidage pour le bras (6) est constitué par une aile d'une cornière (8) dont l'autre aile est fixée à la rotule (1) ou selon le cas conjointement avec celle-ci au pied (3) du rétroviseur.

6. Rétroviseur selon la revendication 5, **caractérisé en ce que** le guidage, est une fente (11), de préférence ouverte dans le bord, de l'aile.

7. Rétroviseur selon la revendication 5, **caractérisé en ce que** le guidage s'étend sensiblement horizontalement.

8. Rétroviseur selon la revendication 1, **caractérisé en ce que** le guidage (11) s'étend sensiblement dans la direction du levier d'utilisation (5).

9. Rétroviseur selon la revendication 5, **caractérisé en ce que** l'autre aile coiffe la boule (2) de la rotule (1) et les éléments de fixation (9) de la boule servent également à la fixation de la cornière (8).

10. Rétroviseur selon la revendication 9, **caractérisé en ce que** la cornière (8) est un constituant de la partie extérieure (la partie emprisonnant la boule de la rotule) de la rotule (1) et s'appuie de préférence directement sur la boule (2) de la rotule.

11. Rétroviseur selon la revendication 1, **caractérisé en ce que** les extrémités de la traverse (12) sont configurées en forme de boule sur laquelle est emmanchée une coupelle (24) comportant une ouverture élastiquement dilatable aux fins du montage, la coupelle présentant une tige (25) qui en part, qui emprisonne fixement les extrémités des câbles (13, 14).
